# EUROPÄISCHE PATENTANMELDUNG

(11) **EP 1 269 897 A1**
(43) Veröffentlichungstag der Anmeldung: **02.01.2003**
(21) Anmeldenummer: 02013274.2
(22) Anmeldetag: 18.06.2002
(51) Int. Cl.: A47J 31/46, A47J 31/40

(54) **Vorrichtung zur Abgabe von Kalt- oder Heisswasser in abgemessenen Portionen, insbesondere zur Herstellung von Getränken**

(30) Priorität: 20.06.2001 DE 10129665
(71) Anmelder: A. u. K. Müller GmbH & Co. KG, 40595 Düsseldorf (DE)
(72) Erfinder: Berger, Gerd, 40593 Düsseldorf (DE); Glaus, Uwe, 40593 Düsseldorf (DE); Moldenhauer, Hermann, 40625 Düsseldorf (DE)
(74) Vertreter: Feder, Wolf-Dietrich, Dr. Dipl.-Phys.

(57) **Zusammenfassung**

Eine Vorrichtung zur Abgabe von Kalt- oder Heißwasser in abgemessenen Portionen, insbesondere zur Herstellung von Getränken, mit einer Dosiereinrichtung (D) zur Abgabe eines vorgegebenen Volumens an Kaltwasser, die an eine Erhitzungseinrichtung (H) angeschlossen ist. Die Dosiereinrichtung besitzt zwei koaxial zueinander angeordnete Dosierzylinder (Z1, Z2) in denen Kolben (Kl, K2) dichtend geführt sind. Die Dosierzylinder (Z1, Z2) besitzen gleiche Länge und unterschiedliche Durchmesser und ihre Innenräume sind miteinander verbunden. Die beiden Kolben (Kl, K2) werden gemeinsam von einem Elektromotor (M) bewegt. Die Dosierzylinder besitzen an ihren Stirnseiten jeweils einen Zu-Ablauf(4, 5, 6). Diese sind jeweils an einen ersten Ein-Ausgang (V 1.1, V 2.1, V 3.1) von drei 3/2-Wegeventilen (V 1, V 2, V 3) angeschlossen, deren zweite Ein-Ausgänge (V 1.2, V 2.2, V 3.2) jeweils miteinander und mit einem Kaltwasser-Zulauf der Erhitzungseinrichtung (H) verbunden sind. Die Eingänge (V 1.0, V 2.0, V 3.0) der 3/2-Wegeventile sind miteinander und mit der Kaltwasserzufuhr verbunden. Die 3/2-Wegeventile ( V 1, V 2, V 3) sind elektrisch umsteuerbar und werden ebenso wie der Elektromotor (M) von einer elektronischen Steuereinrichtung gemäß einem Steuerprogramm angesteuert. Die Vorrichtung ist in variabler Weise zur genauen und raschen Dosierung unterschiedlicher Mengen von Kaltwasser zur Herstellung von Kaltoder Heißgetränken, insbesondere von Kaffee oder Espresso, einsetzbar.

## Beschreibung

Die Erfindung betrifft eine Vorrichtung zur Abgabe von Kalt- oder Heißwasser in abgemessenen Portionen, insbesondere zur Herstellung von Getränken, mit den Merkmalen aus dem Oberbegriff des Patentanspruchs 1.

In EP 0 636 333 B1 ist ein Verfahren zum Aufbrühen von Kaffee in einem Frischbrühautomaten in abgemessenen Kleinportionen beschrieben sowie eine Vorrichtung zur Durchführung dieses Verfahrens, welche die Merkmale aus dem Oberbegriff des Patentanspruchs 1 aufweist.

Der Erfindung liegt die Aufgabe zugrunde, eine Vorrichtung dieser Art derart weiterzuentwickeln, daß sie für unterschiedlichste Formen der Zubereitung von Kalt- oder Heißgetränken anwendbar ist, also beispielsweise zum Aufbrühen von Kaffee in unterschiedlichen Mengen, von Tassen- bis Kannendosierung, aber auch zur Herstellung von Espresso und anderen Heißgetränken sowie zur Herstellung von Instant-Getränken. Dabei sollte eine hohe Genauigkeit und Variabilität der nach wie vor im Kaltwasserbereich durchgeführten Dosierung erreicht werden. Diese Dosierung sollte unabhängig vom momentanen Druck in der Kaltwasserzufuhr sein und es sollten hohe Dosiergeschwindigkeiten erreicht werden. Weiterhin sollte die Möglichkeit bestehen, die Einzelkomponenten der Vorrichtung in kompakten, trennbaren Bauformen aufzubauen.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, die Dosiereinrichtung mit einem oder zwei Dosierzylindern aufzubauen, die doppelt wirkend ausgebildet sind, so daß sie in beiden Bewegungsrichtungen der Kolben zur Dosierung eingesetzt werden können, und deren Kolben von einem Elektromotor, vorzugsweise einem Schrittmotor angetrieben werden, dessen Bewegungen von einer elektronischen Steuereinrichtung angesteuert wird. Die Zufuhr des Kaltwassers von der Dosiereinrichtung zur Abgabe- oder Erhitzungseinrichtung erfolgt über umsteuerbare 3/2-Wegeventile, die ebenfalls von der elektronischen Steuereinrichtung aus angesteuert werden. Wie weiter unten anhand von Ausführungsbeispielen genauer erläutert, ist die erfindungsgemäße Vorrichtung äußerst flexibel einsetzbar, indem die Richtung, die Geschwindigkeit und die Hublänge der Kolbenbewegung mit der Stellung der 3/2-Wegeventile derart koordiniert wird, daß die Aufnahme und Abgabe des Kaltwassers von der Dosiereinrichtung nach genau vorgebbaren Richtwerten erfolgt. Auf diese Weise ist eine hohe Dosierungsgeschwindigkeit und Dosierungsgenauigkeit erzielbar.

Ein besonderer Vorteil der erfindungsgemäßen Vorrichtung besteht auch darin, daß das Steuerprogramm zur Bewegung der Kolben so ausgelegt werden kann, daß die Bewegung der Kolben nach einer frei vorgebbaren Zeitfunktion erfolgt. Die Kolben können also in unterschiedlichen Abschnitten des Bewegungsablaufs unterschiedliche Geschwindigkeiten aufweisen, und es können, falls dies gewünscht wird, auch Zeitabschnitte eingeschaltet werden, in denen die Kolben stillstehen. Dies eröffnet beispielsweise die Möglichkeit, die Bewegung der Kolben derart zu steuern, daß mittels einer zusätzlich der Erhitzungseinrichtung zugeführten Menge an Kaltwasser ein Dampfstoß zur Reinigung des Heißwasser-Ablaufs erzeugt wird.

Weiterhin besteht die Möglichkeit, den Wasserablauf der Dosiereinrichtung über ein zusätzliches, ansteuerbares 3/2-Wegeventil wahlweise mit dem Kaltwasser-Zulauf der Erhitzungseinrichtung oder mit dem Zulauf einer Abgabevorrichtung für Kaltwasser zu verbinden, so daß auch Kaltgetränke abgegeben werden können.

Im folgenden werden Ausführungsbeispiele der erfindungsgemäßen Vorrichtung sowie ihre Wirkungsweise anhand der beigefügten Zeichnungen näher erläutert.

In den Zeichnungen zeigen:
Fig. 1 eine Vorrichtung zur Abgabe von Heißwasser in abgemessenen Kleinportionen mit zwei Dosierzylindern ohne Darstellung der Steuereinrichtung und der Betriebsstromquelle von oben gesehen;
Fig. 1A die Vorrichtung nach Fig. 1 im verkleinerten Maßstab zusammen mit einer schematischen Darstellung der Steuereinrichtung und der Betriebsstromquelle;
Fig. 2 die Dosiereinrichtung der Vorrichtung nach Fig. 1 im Längsschnitt durch die Dosierzylinder in der Grundstellung der Dosierkolben;
Fig. 3 in einer Darstellung analog Fig. 2 die Dosiereinrichtung in einer Zwischenstellung der Dosierkolben;
Fig. 4 in einer Darstellung analog Fig. 2 die Dosiereinrichtung in der Endstellung der Dosierkolben;
Fig. 5 in einer stark schematisierten Prinzipdarstellung eine Vorrichtung zur Abgabe von Heiß- oder Kaltwasser analog Fig. 1 bis 4 in der Grundstellung der Dosierkolben;
Fig. 6 in einer Darstellung analog Fig. 5 die Vorrichtung in einer Zwischenstellung der Dosierkolben während eines ersten Bewegungsablaufs zur Lieferung von Heißwasser zur Kaffeezubereitung;
Fig. 7 die Vorrichtung in einer Zwischenstellung der Dosierkolben während eines zweiten Bewegungsablaufs zur Lieferung von Heißwasser zur Kaffeezubereitung;
Fig. 8 die Vorrichtung in einer Zwischenstellung der Dosierkolben während eines Bewegungsablaufs zur Lieferung von Heißwasser zur Espressozubereitung;
Fig. 9 die Vorrichtung in der Endstellung der Dosierkolben vor einem weiteren Bewegungsablauf zur Lieferung von Heißwasser zur Kaffeezubereitung;
Fig. 10 die Vorrichtung in einer Zwischenstellung der Dosierkolben während eines Bewegungsablaufs zum Ansaugen von frischem Kaltwasser;
Fig. 11 eine schematisierte Schnittdarstellung einer vereinfachten Vorrichtung zur Abgabe von Heiß- oder Kaltwasser mit einem Dosierzylinder in der Grundstellung des Dosierkolbens;
Fig. 12 die Vorrichtung nach Fig. 11 in einer Zwischenstellung des Dosierkolbens bei einem Bewegungsablauf zur Lieferung von Heißwasser für die Kaffeezubereitung;
Fig. 13 die Vorrichtung nach Fig. 11 in einer Zwischenstellung des Dosierkolbens bei einem weiteren Bewegungsablauf zur Lieferung von Heißwasser zur Kaffeezubereitung;
Fig. 14 die Vorrichtung nach Fig. 5 im Betriebszustand der Dosiereinrichtung nach Fig. 6 zur Lieferung von Kaltwasser;
Fig. 15 die Vorrichtung nach Fig. 5 im Betriebszustand der Dosiereinrichtung nach Fig. 7 zur Lieferung von Kaltwasser;
Fig. 16 die Vorrichtung nach Fig. 5 im Betriebszustand der Dosiereinrichtung nach Fig. 9 zur Lieferung von Kaltwasser.

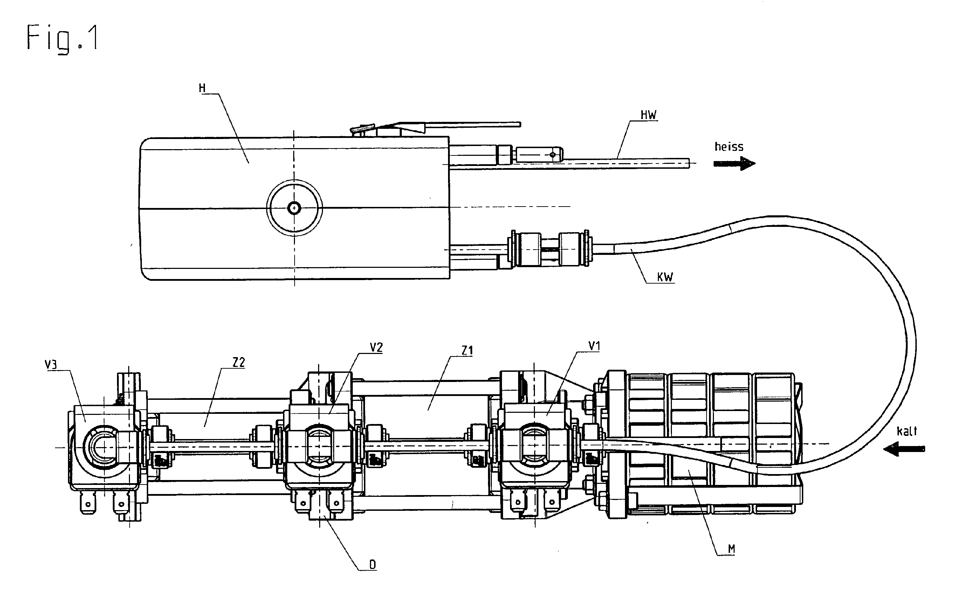

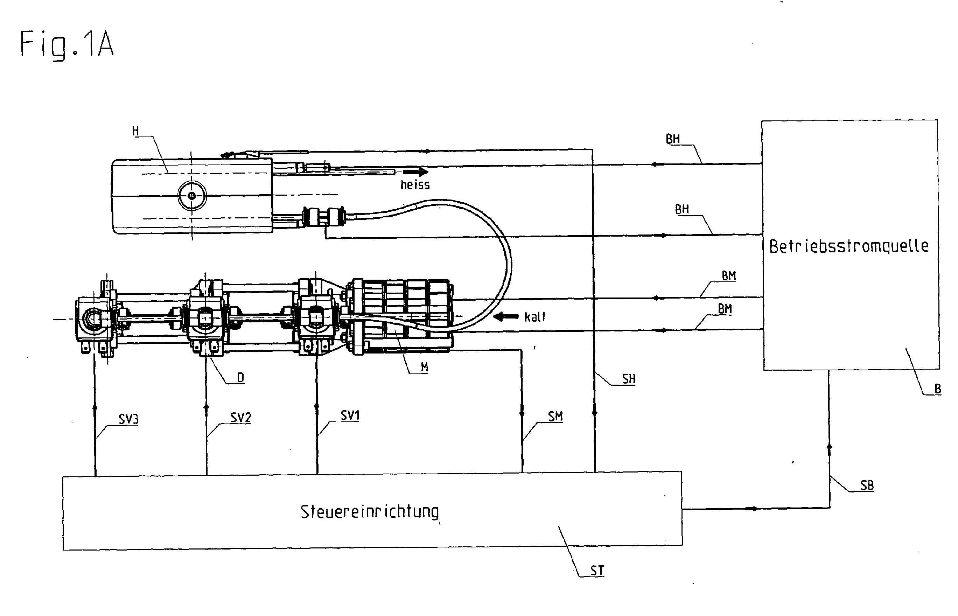

Die in Fig. 1 und 1A schematisch dargestellte Einrichtung, die in nicht eigens dargestellter Weise Teil eines Frischbrühautomaten zur Herstellung von Kaffee sein kann, umfaßt eine allgemein mit D bezeichnete Dosiereinrichtung zur Erfassung und Abgabe eines vorgegebenen Volumens an Kaltwasser, welches über einen Kaltwasser-Zulauf KW einer Erhitzungseinrichtung H zugeführt wird und von dieser über eine Leitung HW einer nicht dargestellten Abgabevorrichtung für das Heißwasser zugeführt wird, die beispielsweise ein Abgabeventil zur Abgabe von Brühwasser an eine nicht dargestellte Brühkammer aufweisen kann, während beispielsweise ein anderes Abgabeventil zur Abgabe von Wasser mit beispielsweise 70° Temperatur zur Herstellung von Instantgetränken gedacht sein kann.

Die Einzelheiten der Erhitzungskammer werden im folgenden nicht genauer dargestellt. Diese kann beispielsweise so aufgebaut sein, wie in EP 0 636 333 B1 beschrieben.

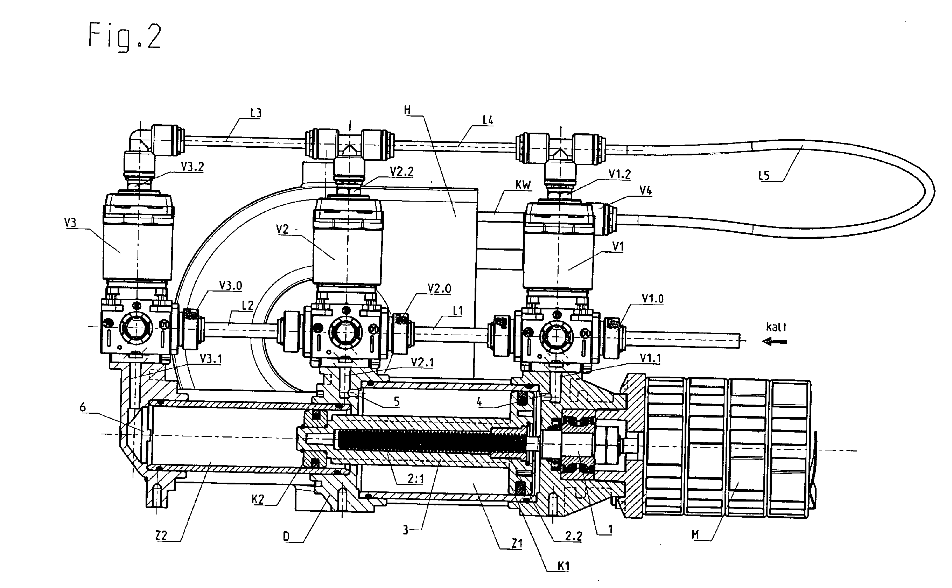

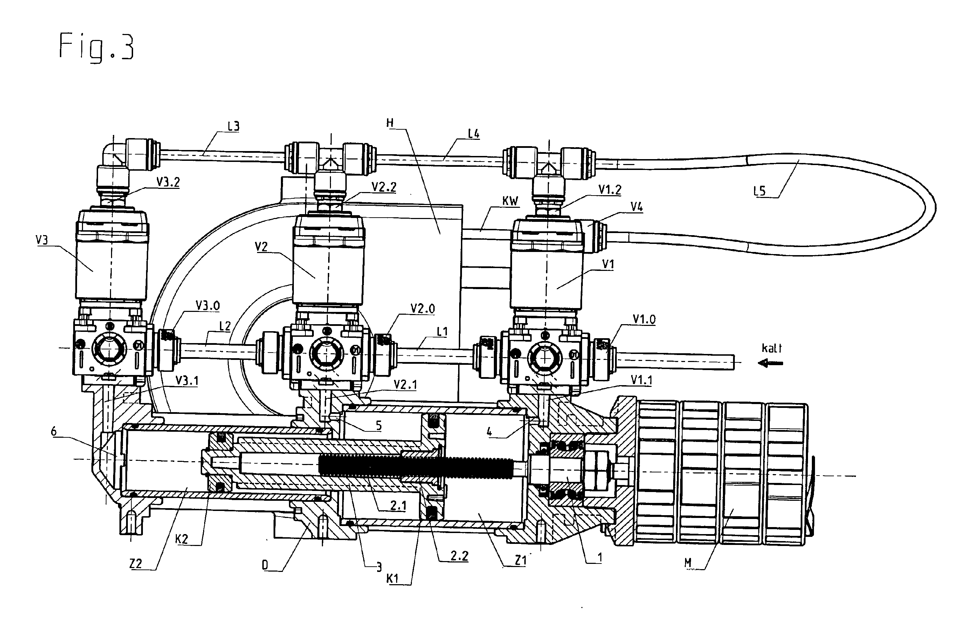

Die Dosiereinheit D besitzt, wie aus den Fig. 2 bis 4 genauer zu erkennen, einen ersten Dosierzylinder Z1, in dem ein Kolben K1 dichtend geführt ist und der an seinen beiden Stirnseiten jeweils einen Zu-Ablauf 4 bzw. 5 besitzt. Der Kolben K1 trägt eine mit Innengewinde versehene Hülse 2.2, in die eine Gewindestange 2.1 eingreift, die aus dem Zylinder herausgeführt ist und mit der Abtriebswelle 1 eines Schrittmotors M verbunden ist. Infolge dieses einfach aufgebauten Schraubgetriebes bewegt sich der Kolben K1 bei Betätigung des Schrittmotors M entlang der Gewindestange 2.1 im Dosierzylinder Z1. Am Kolben K1 ist eine rohrförmige Verbindungsstange 3 angeordnet, in welcher sich die Gewindestange 2.1 befindet. Die Verbindungsstange 3 ist koaxial durch den Dosierzylinder Z1 hindurchgeführt und an dem der Antriebsseite des Dosierzylinders gegenüberliegenden Ende aus dem Zylinder herausgeführt. Sie ist in einen zweiten Dosierzylinder Z2 hineingeführt, der koaxial zum ersten Dosierzylinder Z1 liegt und direkt an diesen anschließt. Die Innenräume der beiden Dosierzylinder Z1 und Z2 sind an der Anschlußstelle in der Weise miteinander verbunden, daß der Innenraum des zweiten Dosierzylinders Z2 mit seiner vollen Öffnungsweite an den Innenraum des ersten Dosierzylinders Z1 anschließt. Die beiden Dosierzylinder Z1 und Z2 besitzen die gleiche Länge und der Durchmesser des zweiten Dosierzylinders Z2 ist kleiner als der Durchmesser des ersten Dosierzylinders Z1. Der erste Dosierzylinder Z1 ist als Niederdruckzylinder für einen Druck von maximal 1,0 bar und der zweite Dosierzylinder als Hochdruckzylinder für einen Druck von maximal 15 bar ausgelegt. Der Zu-Ablauf 4 des ersten Dosierzylinders Z1 ist an einen ersten Ein-Ausgang V 1.1 eines elektrisch umsteuerbaren, beispielsweise als Magnetventil ausgebildeten 3/2-Wegeventils V 1 angeschlossen. In analoger Weise ist der Zu-Ablauf 5 an den ersten Ein-Ausgang eines elektrisch umsteuerbaren 3/2-Wegeventils V2 angeschlossen. Die Eingänge V 1.0 und V 2.0 der beiden 3/2-Wegeventile V 1 und V 2 sind miteinander und mit einer Kaltwasserzufuhr verbunden. Die zweiten Ein-Ausgänge V 1.2 und V 2.2 der beiden 3/2-Wegeventile V 1 und V 2 sind ebenfalls miteinander und weiterhin über Leitungsstücke L4 und L5 mit dem Kaltwasser-Zulauf KW der Erhitzungseinrichtung H verbunden.

Der zweite Dosierzylinder Z2 besitzt an seiner vom ersten Dosierzylinder Z1 abgewandten Stirnseite einen Zu-Ablauf 6, der an den ersten Eingang V 3.1 eines dritten elektrisch umsteuerbaren 3-/2-Wegeventils V 3 angeschlossen ist, dessen Eingang V 3.0 mit der Kaltwasserzufuhr und den Eingängen V 2.0 und V 1.0 der beiden anderen 3/2-Wegeventile V 1 und V 2 verbunden ist. Der zweite Ein-Ausgang des 3/2-Wegeventils V 3 ist wiederum über die Leitungsstücke L3, L4 und L5 mit den zweiten Ein-Ausgängen V 1.2 und V 2.2 der beiden anderen 3/2-Wegeventile V 1 und V 2 verbunden sowie mit dem Kaltwasserzulauf KW der Erhitzungseinrichtung H.

Wie aus Fig. 1A zu ersehen, sind die drei 3/2-Wegeventile V 1, V 2 und V 3 von einer Steuereinrichtung ST aus über Steuerleitungen SV 1, SV 2 und SV 3 umsteuerbar. Weiterhin ist von der Steuereinrichtung ST her über Steuerleitungen SB die Betriebsstromquelle B für den Schrittmotor M und die Erhitzungseinrichtung H ansteuerbar, die über Speiseleitungen BM bzw. BH mit Betriebsstrom versorgt werden. Dabei gibt die nicht dargestellte temperaturgesteuerte Heizvorrichtung der Erhitzungseinrichtung H ein Temperatursignal über eine Leitung SH an die Steuereinrichtung ST ab. Der Schrittmotor M gibt ein Stellungssignal über eine Leitung SM an die Steuereinrichtung ST ab. In der vorzugsweise einen Rechner enthaltenden Steuereinrichtung ST werden programmgesteuert die notwendigen Steuersignale erzeugt und an die 3/2-Wegeventile und die Betriebsstromquelle B abgegeben.

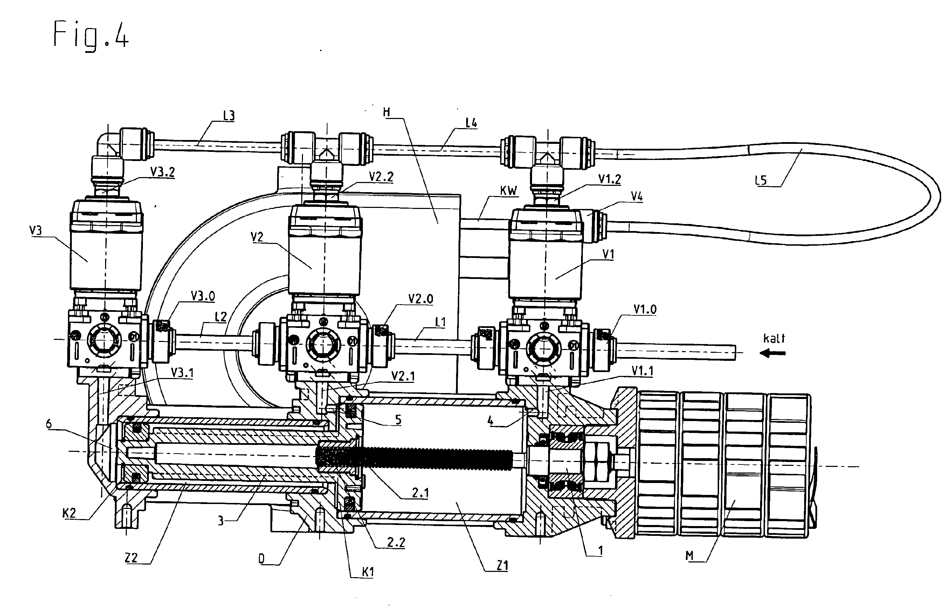

In Fig. 2 befinden sich die beiden Kolben K1 und K2 der Dosierzylinder in einer Grundstellung, die weiter unten anhand der Beschreibung der Funktionsweise der Dosiereinrichtung näher erläutert wird. In Fig. 2 ist eine Zwischenstellung der beiden Kolben K1 und K2 der Dosierzylinder Z1 und Z2 dargestellt, während sie sich in Fig. 4 beide in der Endstellung am jeweils anderen Ende der Dosierzylinder Z1 und Z2 befinden.

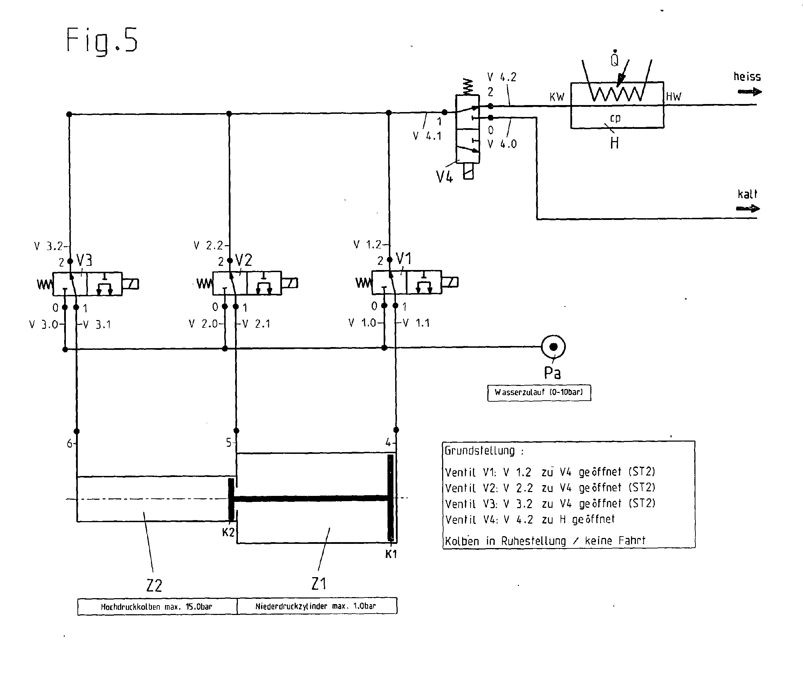

Die elektrisch umsteuerbaren 3/2-Wegeventile V 1, V 2 und V 3 sind so aufgebaut, daß jedes aus einer ersten Stellung, die in den Fig. 5 bis 13 mit ST1 bezeichnet ist und in welcher der erste Ein-Ausgang V 1.1, V 2.1 bzw. V 3.1 mit dem Eingang V 1.0, V 2.0 bzw. V 3.0 verbunden ist, während der zweite Ein-Ausgang V 1.2, V 2.2 bzw. V 3.2 gesperrt ist, in eine zweite Stellung umsteuerbar sind, die in den Fig. 5 bis 16 mit ST2 bezeichnet ist und in welcher der erste Ein-Ausgang V 1.1, V 2.1 bzw. V 3.1 mit dem zweiten Ein-Ausgang V 1.2, V 2.2 bzw. V 3.2 verbunden ist, während der Eingang V 1.0, V 2.0 bzw. V 3.0 gesperrt ist.

Da die drei umsteuerbaren 3/2-Wegeventile V 1 bis V 3 jeweils von der Steuereinrichtung ST her selbständig angesteuert werden können und die Stellungen dieser Ventile jeweils ebenfalls von der Steuereinrichtung ST her programmgesteuert mit genau festgelegten Hin- und Herbewegungen der beiden Kolben K1 und K2 der Dosierzylinder Z1 und Z2 über den Schrittmotor M koordiniert werden können, ergeben sich eine große Zahl variabler Möglichkeiten der Kaltwasserzufuhr an die Erhitzungseinrichtung H und damit eine große Variabilität in der Abgabe unterschiedlicher Mengen von unterschiedlichen Heißgetränken, insbesondere unterschiedlicher Mengen an aufgebrühtem Kaffee oder Espresso.

Diese unterschiedlichen Möglichkeiten der Kaltwasserzufuhr zur Erhitzungseinrichtung H und damit die Funktionsweise der Dosiereinrichtung D werden im folgenden anhand der Fig. 5 bis 16 näher erläutert.

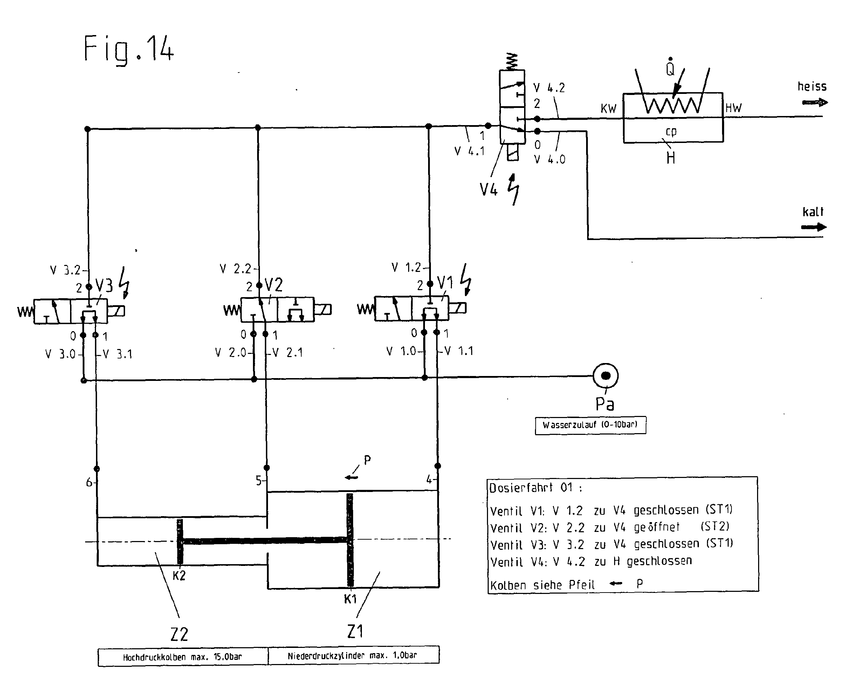

In den Fig. 5 bis 10 sowie 14 bis 16 ist die Vorrichtung nach Fig. 1 bis 4 in sehr schematischer Weise in der Art eines Schaltungsdiagramms dargestellt, wobei der Schrittmotor M aus Gründen der Vereinfachung weggelassen ist. Diese Vorrichtung weist gegenüber der Vorrichtung nach Fig. 1 bis 4 die Besonderheit auf, daß der Erhitzungseinrichtung H ein weiteres 3/2-Wegeventil V4 vorgeschaltet ist, so daß die Möglichkeit besteht, das von der Dosiereinrichtung abgegebene Kaltwasser über das Ventil V4 entweder der Erhitzungseinrichtung H oder einer nicht dargestellten Abgabevorrichtung für Kaltwasser zuzuführen. Entsprechend erläutern die Fig. 5 bis 10 die Abgabe von Heißwasser und die Fig. 14 bis 16 die Abgabe von Kaltwasser.

Fig. 5 zeigt die Grundstellung der Dosiereinrichtung, in welcher die beiden Kolben K1 und K2 an der dem Antrieb zugewandten Stirnseite der beiden Dosierzylinder Z und Z2 liegen. Der Einfachheit halber sind auch die Antriebe der beiden Kolben K1 und K2 als einfache Kolbenstangen dargestellt, die im folgenden nicht näher erläutert werden. Die beiden Kolben K1 und K2 befinden sich in diesem Zustand in der Ruhestellung und die 3/2-Wegeventile V 1 bis V 3 befinden sich in der oben erwähnten Stellung ST2, in der sie zu der Erhitzungseinrichtung H über das Ventil V 4 geöffnet und gegenüber dem Kaltwasserzulauf Pa (0 bis 10 bar) geschlossen sind.

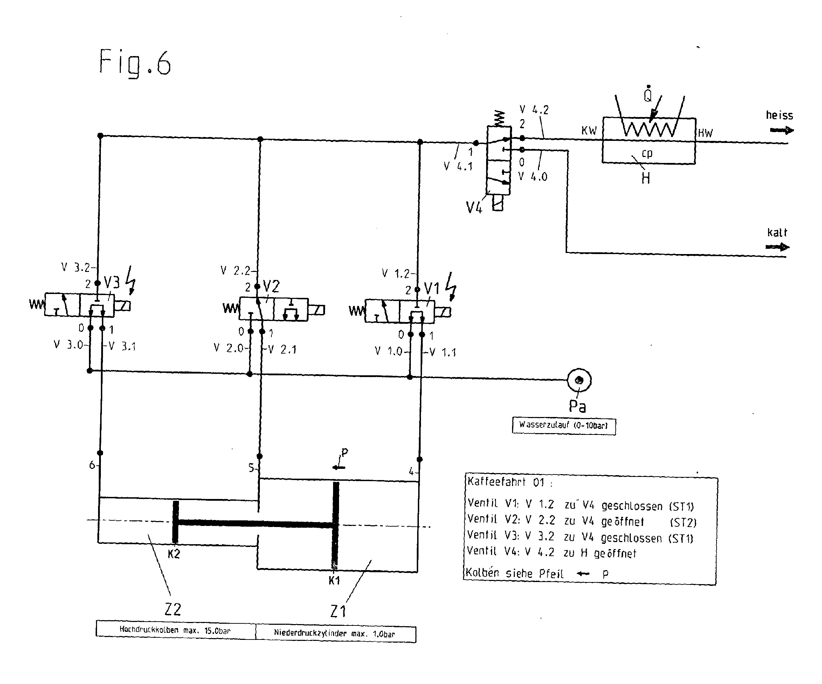

Fig. 6 zeigt einen Zustand der Dosierungsvorrichtung mit einer ersten Möglichkeit der Erhitzungseinrichtung H, die für das Aufbrühen von Kaffee notwendige Kaltwassermenge zuzuführen. Die beiden Kolben K1 und K2 bewegen sich in den Dosierzylindern Z1 und Z2 in Pfeilrichtung P. Ventil V 1 befindet sich in Stellung ST1, Ventil V 2 in Stellung ST2 und Ventil V 3 in Stellung ST1. Wie aus Fig. 6 abzulesen, wird durch den Kolben K1 eine abgemessene Menge Kaltwasser über den Zu-Ablauf 5 und das Ventil V 2 zum Ventil V 4 befördert, während das vom Kolben K2 im Dosierzylinder Z2 verdrängte Wasser über das Ventil V 3 und das Ventil V 1 zusammen mit weiter nachgeliefertem Kaltwasser in den Raum hinter dem Kolben K1 des Dosierzylinders Z1 strömt. Die gelieferte Kaltwassermenge entspricht der Differenz der Volumina der beiden Zylinder Z1 und Z2. Diese Menge könnte beispielsweise einer Tasse Kaffee entsprechen.

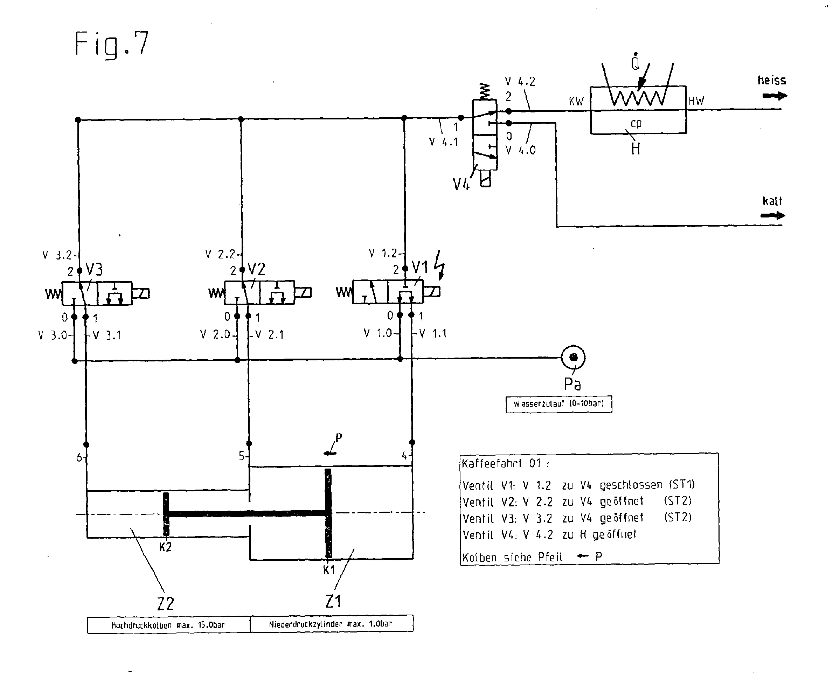

Fig. 7 zeigt eine andere Möglichkeit der Dosierung, bei welcher eine größere Menge Kaltwasser an die Erhitzungseinrichtung H abgegeben wird. Die beiden Kolben K1 und K2 bewegen sich wiederum aus der Grundstellung in Pfeilrichtung P. Ventil V 1 befindet sich in Stellung ST1, Ventil V 2 in Stellung ST2 und Ventil V 3 in Stellung ST2. Wie aus der Figur zu erkennen, strömt das vom Kolben K2 verdrängte Kaltwasser über den Zu-Ablauf 6 und das Ventil V3 und das vom Kolben K1 verdrängte Wasser über den Zu-Ablauf 5 und das Ventil V 2 zum Ventil V 4 und damit zur Erhitzungseinrichtung H. Über das Ventil V 1 strömt Frischwasser vom Wasserzulauf Pa her in den Raum hinter den Kolben K1.

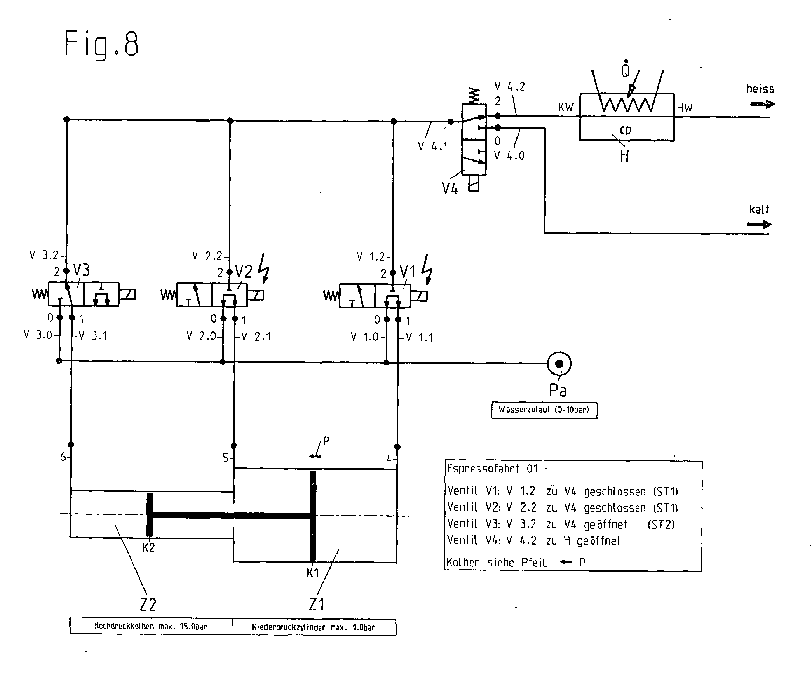

Fig. 8 zeigt eine Möglichkeit der Kaltwasserzufuhr zur Zubereitung von Espresso. Die beiden Kolben K1 und K2 bewegen sich wiederum in Pfeilrichtung P. Ventil V 1 befindet sich in Stellung ST1, Ventil V 2 befindet sich in Stellung ST1 und Ventil V 3 befindet sich in Stellung ST2. Wie aus Figur 8 abzulesen, wird das vom Kolben K2 im Dosierzylinder Z2, der ein Hochdruckzylinder ist, verdrängte Wasser über den Zu-Ablauf 6 und die Ventile V 3 und V 4 zur Erhitzungseinrichtung H hin abgegeben. In dem Raum hinter den beiden Kolben K1 und K2 strömt Frischwasser über die Ventile V 1 und V 2 ein.

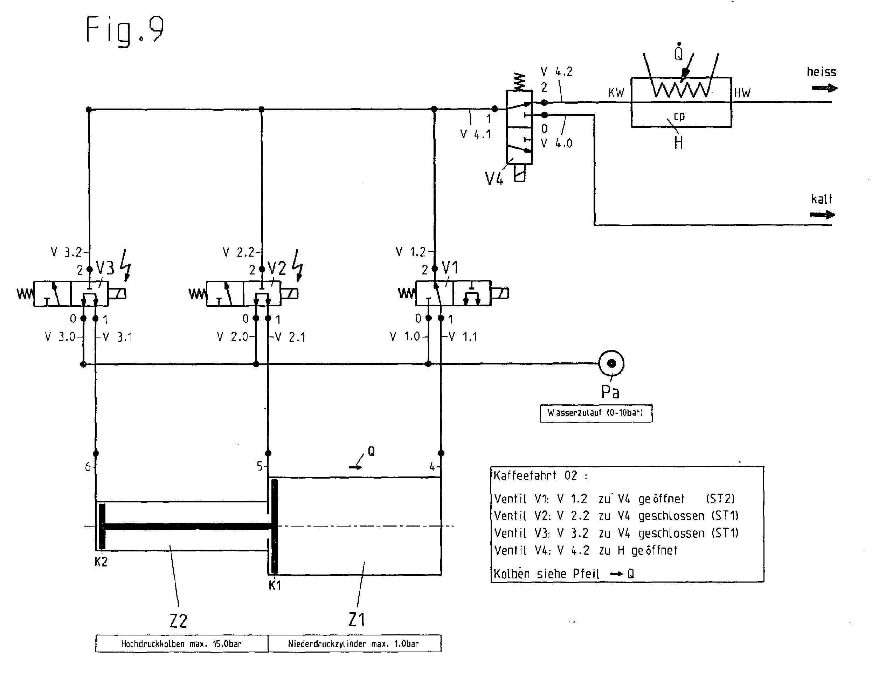

Fig. 9 zeigt eine weitere Möglichkeit der Kaltwasserdosierung zur Erzeugung von Kaffee mittels des Dosierzylinders Z1, der ein Niederdruckzylinder ist. Diesmal erfolgt die Bewegung der Kolben K1 und K2 rückwärts in Pfeilrichtung Q. Ventil V 1 befindet sich in Stellung ST2, Ventil V 2 in Stellung ST1 und Ventil V 3 ebenfalls in Stellung ST1. Das vom Kolben K1 beim Rückwärtslauf verdrängte Kaltwasser strömt über den Zu-Ablauf 4 und die Ventile V 1 und V 4 zur Erhitzungseinrichtung H, während der Raum hinter den Kolben K1 und K2 über die Ventile V 2 und V 3 mit Frischwasser gefüllt wird.

Der Bewegungsablauf gem. Fig. 9 macht noch einmal deutlich, daß beide Bewegungsrichtungen der Kolben K1 und K2 zur Dosierung ausgenutzt werden können.

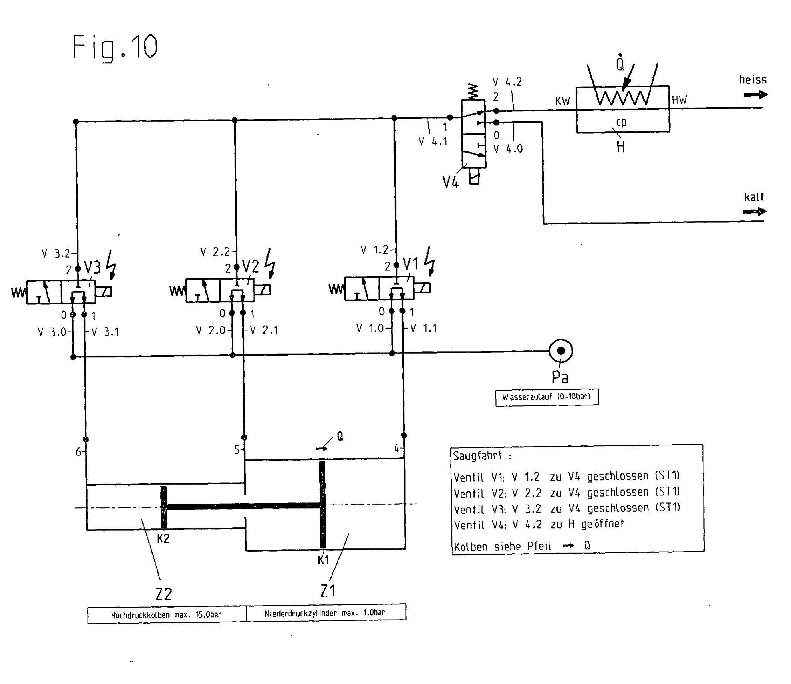

Fig. 10 zeigt eine Möglichkeit, ohne Abgabe von Kaltwasser an die Erhitzungseinrichtung H die beiden Kolben in die Grundstellung zurückzuführen in einer "Saugfahrt". Die Bewegung der Kolben K1 und K2 erfolgt in Pfeilrichtung Q und die Ventile V 1 bis V 3 befinden sich sämtlich in der Stellung ST1. Wie aus Fig. 10 abzulesen, wird bei dieser Bewegung Frischwasser über den Zu-Ablauf 4 und das Ventil V 1 in den Wasserzulauf Pa zurückgefördert, während über die Ventile V 2 und V 3 das Wasser in den Raum hinter den Kolben K1 und K2 nachströmt.

Die in den Fig. 14 bis 16 dargestellten Betriebszustände zeigen, daß unter Umgehung der Erhitzungseinrichtung H infolge einer entsprechenden Ansteuerung des Ventils V 4 auch direkt Kaltwasser in abgemessenen Portionen abgegeben werden kann. Fig. 14 zeigt die Vorrichtung nach Fig. 5 in dem Betriebszustand, wie er in Fig. 6 dargestellt ist, mit der Ausnahme, daß Ventil V 4 derart angesteuert ist, daß sein Eingang V 4.1 nicht mit dem zur Erhitzungseinrichtung H führenden Ausgang V 4.2, sondern mit dem Ausgang V 4.0 verbunden ist, so daß das dosierte Kaltwasser unter Umgehung der Erhitzungseinrichtung H direkt abgegeben wird.

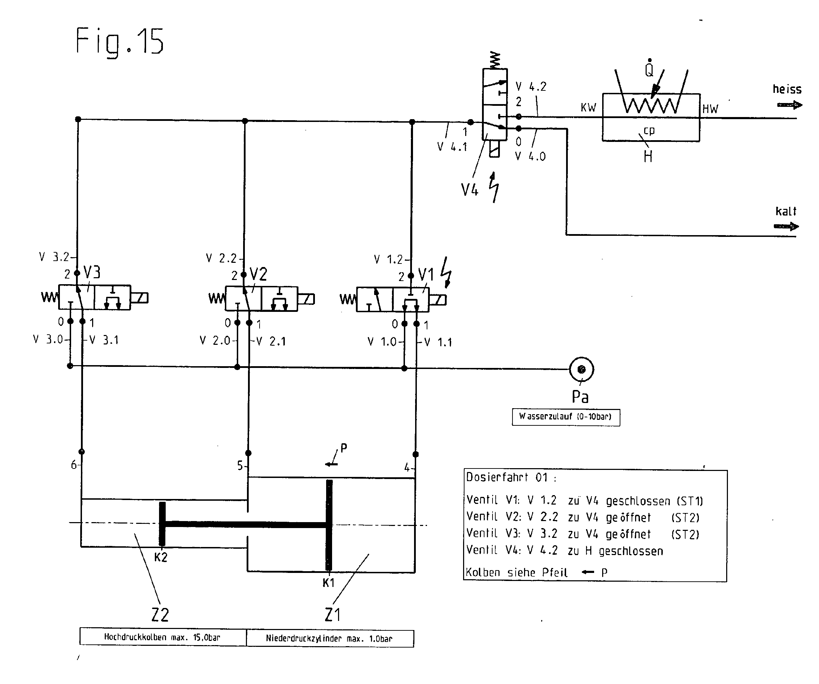

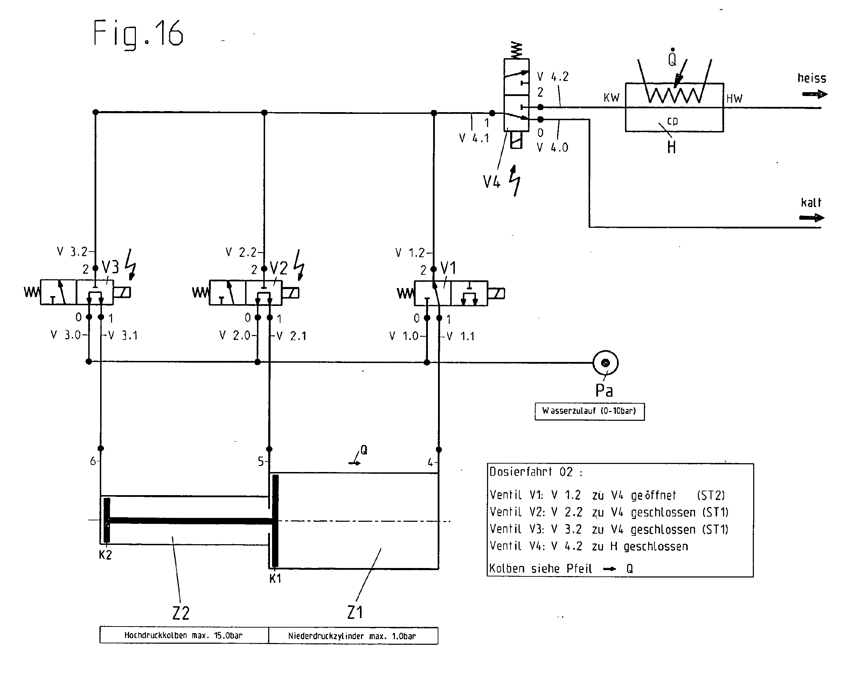

In analoger Weise zeigt Fig. 15 die Vorrichtung im Betriebszustand der Dosiereinrichtung gem. Fig. 7 ebenfalls mit dem Unterschied, daß Ventil V 4 derart angesteuert ist, daß das dosierte Kaltwasser direkt abgegeben wird. Fig. 16 zeigt den Betriebszustand analog Fig. 9 ebenfalls mit einer Ansteuerung des Ventils V 4 zur Abgabe von Kaltwasser.

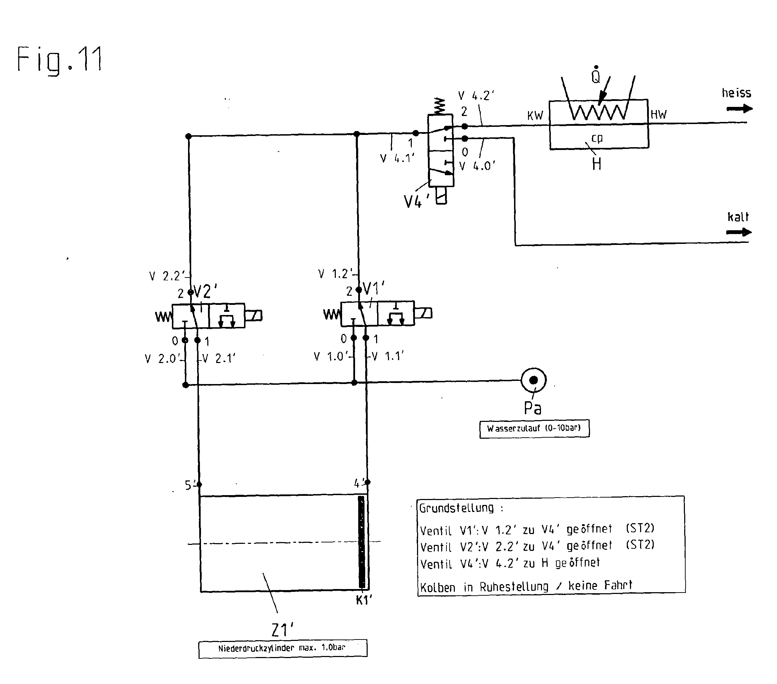

Im folgenden wird anhand der Fig. 11 bis 13 eine Möglichkeit der Vereinfachung der Dosiereinrichtung in ihrer Wirkungsweise beschrieben, die als Vorrichtung nicht im einzelnen dargestellt ist. Bei dieser vereinfachten Einrichtung wird auf den zweiten Dosierzylinder, also den Hochdruckzylinder, verzichtet und es fällt dann auch das 3/2-Wegeventil V 3 weg. Diese Einrichtung ist ebenfalls zur Abgabe von Heißwasser oder Kaltwasser gedacht. In den Fig. 11 bis 13 sind für entsprechende Teile die gleichen Bezugsziffern verwendet und mit einem Apostrophstrich gekennzeichnet.

Fig. 11 zeigt den Dosierzylinder Z1', in welchem sich der dichtend geführte Kolben K1' in der Grundstellung befindet. Das Ventil V 1' befindet sich in Stellung ST2 und ebenso befindet sich das Ventil V 2' in Stellung ST2. Demnach sind die Zu-Abläufe 4' und 5' des Dosierzylinders Z1' über die Ventile V 1', V 2' und V 4' an die Erhitzungseinrichtung H angeschlossen, während der Wasserzulauf durch die Ventile V 1' und V 2' gesperrt ist. Der Kolben befindet sich in Ruhestellung.

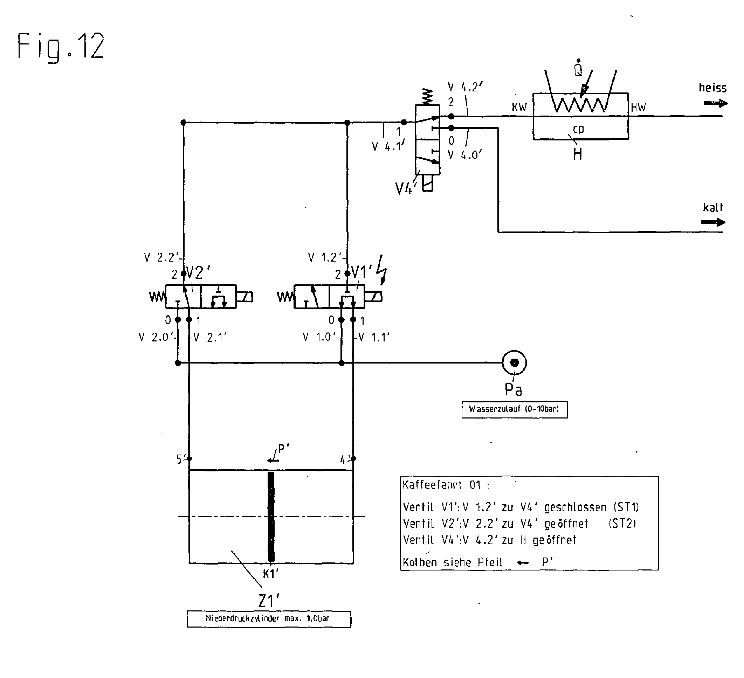

Fig. 12 zeigt, wie die Dosierung von Kaltwasser zur Kaffeezubereitung in einer ersten Möglichkeit erfolgt. Der Kolben K1' bewegt sich in Pfeilrichtung P' und Ventil V 1' befindet sich in Stellung ST1, während sich Ventil V 2' weiterhin in Stellung ST2 befindet. Das vom Kolben Kl' verdrängte Wasser strömt über den Zu-Ablauf 5' und die Ventile V 2' und V 4' zur Erhitzungseinrichtung H, während in den Raum hinter dem Kolben K1' das Wasser vom Wasserzulauf Pa über das Ventil V 1' und den Zu-Ablauf 4' nachströmt.

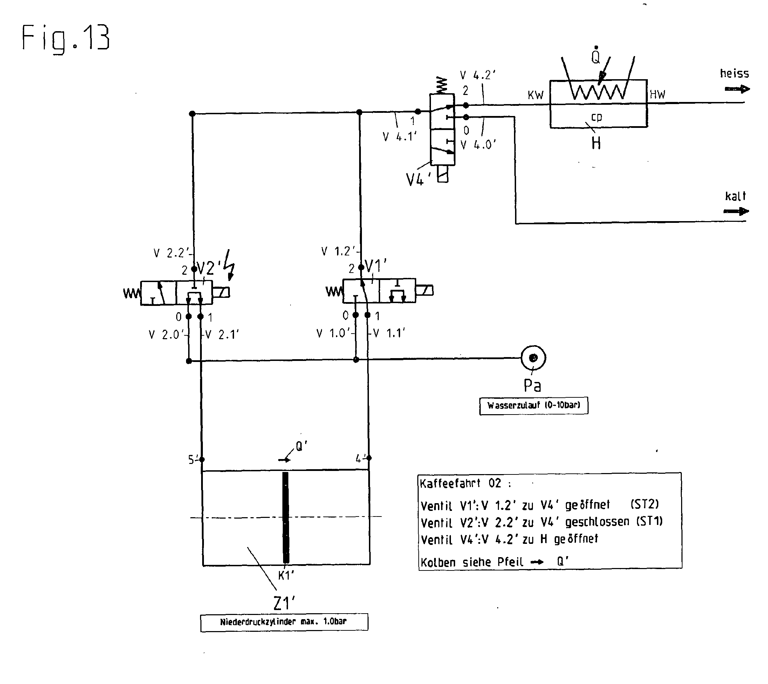

Fig. 13 zeigt, daß die gleiche Wasserdosierung beim Rücklauf des Kolbens möglich ist. Der Kolben K1' bewegt sich in Pfeilrichtung Q', während sich Ventil V 1' in der Stellung ST2 und Ventil V 2' in Stellung ST1 befindet. Das vom Kolben K1' verdrängte Wasser strömt über den Zu-Ablauf 4' und die Ventile V 1' und V 4' zur Erhitzungseinrichtung H, während Frischwasser über das Ventil V 2' und den Zu-Ablauf 5' in den Raum hinter dem Kolben strömt.

## Patentansprüche

1. Vorrichtung zur Abgabe von Kalt- oder Heißwasser in abgemessenen Portionen, insbesondere zur Herstellung von Getränken, mit einer Dosiereinrichtung zur Erfassung und Abgabe eines vorgegebenen Volumens an Kaltwasser unabhängig vom momentanen Druck des der Dosiereinrichtung zugeführten Kaltwassers, wobei die einen Wasserzulauf und einen Wasserablauf besitzende Dosiereinrichtung einen Dosierzylinder enthält, in dem ein Kolben dichtend geführt ist, **dadurch gekennzeichnet, daß** der Dosierzylinder (Z1) an jeder Stirnseite einen Zu-Ablauf (4, 5) besitzt und jeder Zu-Ablauf an jeweils einen ersten Ein-Ausgang (V 1.1, V 2.1) eines elektrisch umsteuerbaren 3/2-Wegeventils (V 1, V 2) angeschlossen ist und die Eingänge (V 1.0, V 2.0) der beiden 3/2-Wegeventile (V 1, V 2) miteinander und mit dem Wasserzulauf verbunden sind, während die zweiten Ein-Ausgänge (V 1.2, V 2.2) der beiden 3/2-Wegeventile (V 1, V 2) miteinander und mit dem Wasserablauf verbunden sind, wobei die beiden 3/2-Wegeventile (V 1, V 2) jeweils aus einer ersten Stellung (ST1), in welcher der erste Ein-Ausgang (V 1.1, V 2.1) mit dem Eingang (V 1.0, V 2.0) verbunden ist, während der zweite Ein-Ausgang (V 1.2, V 2.2) gesperrt ist, in eine zweite Stellung (ST2) umsteuerbar sind, in welcher der erste Ein-Ausgang (V 1.1, V 2.1) mit dem zweiten Ein-Ausgang (V 1.2, V 2.2) verbunden ist, während der Eingang (V 1.0, V 2.0) gesperrt ist, und der Kolben (K1) des Dosierzylinders über ein Schraubgetriebe (2.1, 2.2) mit der Abtriebswelle (1) eine Elektromotors (M) verbunden ist und eine elektronische Steuereinrichtung (ST) zur Ansteuerung des Elektromotors (M) und zur Umsteuerung der 3/2-Wegeventile (V 1, V 2) nach einem vorgegebenen Steuerprogramm vorhanden ist.

2. Vorrichtung nach Anspruch 1, **dadurch gekennzeichnet, daß** der Elektromotor (M) ein Schrittmotor ist.

3. Vorrichtung nach Anspruch 1, **dadurch gekennzeichnet, daß** der Elektromotor ein Gleichstrommotor mit Inkrementalgeber ist.

4. Vorrichtung nach einem der Ansprüche 1 bis 3 zur Abgabe von Heißwasser oder Heißwasser und Kaltwasser, **dadurch gekennzeichnet, daß** der Wasserablauf der Dosiereinrichtung an eine Erhitzungseinrichtung (H) angeschlossen oder anschließbar ist, welche einen Kaltwasser-Zulauf (KW) und einen Heißwasser-Ablauf (HW) besitzt, wobei die Erhitzungseinrichtung in engem thermischen Kontakt mit einem Wärmespeicher vorgegebener Wärmekapazität steht, der an eine temperaturgesteuerte Heizvorrichtung angeschlossen ist.

5. Vorrichtung nach einem der Ansprüche 1 bis 4, **dadurch gekennzeichnet, daß** gemäß dem vorgegebenen Steuerprogramm der Kolben (K1) des Dosierzylinders (Z1) aus einer Grundstellung, in der sich beide 3/2-Wegeventile (V 1, V 2) in der zweiten Stellung (ST2) befinden, in eine Endstellung bewegbar ist, wobei während dieser Bewegung das sich in Bewegungsrichtung des Kolbens (K1) gesehen stromabwärts liegende 3/2-Wegeventil (V 2) in der zweiten Stellung (ST2) befindet, während sich das stromaufwärts liegende 3/2-Wegeventil (V 1) in der ersten Stellung (ST1) befindet.

6. Vorrichtung nach einem der Ansprüche 1 bis 4, **dadurch gekennzeichnet, daß** gemäß dem vorgegebenen Steuerprogramm der Kolben (K1) des Dosierzylinders (Z1) aus seiner Endstellung zurück in die Grundstellung bewegbar ist, wobei während dieser Bewegung das in Bewegungsrichtung des Kolbens (K1) gesehen stromabwärts liegende 3/2-Wegeventil (V1) sich in der zweiten Stellung (ST2) befindet, während sich das stromaufwärts liegende 3/2-Wegeventil (V2) in der ersten Stellung (ST1) befindet.

7. Vorrichtung nach einem der Ansprüche 1 bis 6, **dadurch gekennzeichnet, daß** der Dosierzylinder (Z1) als Niederdruckzylinder ausgebildet ist und sich an der von der Antriebsseite abgewandten Stirnseite des Dosierzylinders (Z1) und koaxial zu diesem ein zweiter als Hochdruckzylinder ausgebildeter Dosierzylinder (Z2) anschließt, dessen Länge der Länge des ersten Dosierzylinders (Z1) entspricht und dessen Durchmesser kleiner ist als der Durchmesser des ersten Dosierzylinders (Z1) und in dem ein zweiter Kolben (K2) dichtend geführt ist, wobei der zweite Kolben (K2) über eine Verbindungsstange (3) mit dem ersten Kolben (K1) verbunden ist und die Innenräume des ersten und zweiten Dosierzylinders (Z1, Z2) miteinander verbunden sind und der zweite Dosierzylinder (Z2) an seiner vom ersten Dosierzylinder (Z1) abgewandten Stirnseite einen Zu-Ablauf (6) besitzt, der an den ersten Ein-Ausgang (V 3.1) eines dritten elektrisch umsteuerbaren 3/2-Wegeventils (V 3) angeschlossen ist, dessen Eingang (V 3.0) mit dem Wasserzulauf und den Eingängen (V 1.0, V 2.0) der beiden anderen 3/2-Wegeventile (V 1, V2) verbunden ist, während sein zweiter Ein-Ausgang (V 3.2) mit dem Wasserablauf und den zweiten Ein-Ausgängen (V 1.2, V 2.2) der beiden anderen 3/2-Wegeventile (V 1, V 2) verbunden ist, wobei das dritte 3/2-Wegeventil (V 3) von der elektronischen Steuereinrichtung (ST) in der gleichen Weise in eine erste Stellung (ST1) und eine zweite Stellung (ST2) umsteuerbar ist wie die beiden anderen 3/2-Wegeventile (V 1, V 2).

8. Vorrichtung nach Anspruch 7, **dadurch gekennzeichnet, daß** der Innenraum des zweiten Dosierzylinders (Z2) mit seiner vollen Öffnungsweite an den Innenraum des ersten Dosierzylinders (Z1) anschließt.

9. Vorrichtung nach Anspruch 7 oder 8, **dadurch gekennzeichnet, daß** gemäß dem vorgegebenen Steuerprogramm die beiden Kolben (K1, K2) der Dosierzylinder (Z1, Z2) aus einer Grundstellung, in der sich alle 3/2-Wegeventile (V 1, V 2, V 3) in der zweiten Stellung (ST2) befinden, in eine Endstellung bewegbar sind, wobei während dieser Bewegung sich mindestens eines der in Bewegungsrichtung der Kolben (K1, K2) gesehen stromabwärts liegenden 3/2-Wegeventile in der zweiten Stellung (ST2) befindet, während sich das stromaufwärts liegende 3/2-Wegeventil in der ersten Stellung (ST1) befindet.

10. Vorrichtung nach Anspruch 7 oder 8, **dadurch gekennzeichnet, daß** gemäß dem vorgegebenen Steuerprogramm die beiden Kolben (K1, K2) der Dosierzylinder (Z1, Z2) aus ihrer Endstellung zurück in die Grundstellung bewegbar sind, wobei während dieser Bewegung sich mindestens die in Bewegungsrichtung der Kolben (K1, K2) gesehen, stromaufwärts liegenden 3/2-Wegeventile in der ersten Stellung (ST1) befinden.

11. Vorrichtung nach einem der Ansprüche 1 bis 10, **dadurch gekennzeichnet, daß** gemäß dem vorgegebenen Steuerprogramm die Bewegung der Kolben (K1, K2) nach einer frei vorgebbaren Zeitfunktion erfolgt.

12. Vorrichtung nach den Ansprüchen 4 und 11, **dadurch gekennzeichnet, daß** gemäß dem vorgegebenen Steuerprogramm die Bewegung der Kolben (K1, K2) derart gesteuert wird, daß mittels einer zusätzlich der Erhitzungseinrichtung (H) zugeführten Menge an Kaltwasser ein Dampfstoß zur Reinigung des Heißwasser-Ablaufs erzeugt wird.

13. Vorrichtung nach Anspruch 4 und gegebenenfalls einem der Ansprüche 5 bis 12, **dadurch gekennzeichnet, daß** der Wasserablauf der Dosiereinrichtung über ein zusätzliches, von der Steuereinrichtung (ST) ansteuerbares 3/2-Wegeventil (V4) wahlweise mit dem Kaltwasser-Zulauf (KW) der Erhitzungseinrichtung (H) oder mit dem Zulauf einer Abgabevorrichtung für Kaltwasser verbindbar ist.
